# EUROPEAN PATENT SPECIFICATION

(11) **EP 1 421 857 B1**
(45) Date of publication and mention of the grant of the patent: **30.05.2007**
(21) Application number: 03024752.2
(22) Date of filing: 29.10.2003
(51) Int. Cl.: A23G 9/08, A23G 9/30

(54) **Ice-cream making machine**
Speiseeismaschine
Machine à crème-glacée

(30) Priority: 13.11.2002 IT ge20020103
(43) Date of publication of application: 26.05.2004
(73) Proprietor: ALI S.p.A. - CARPIGIANI GROUP, 40011 Anzola Emilia (IT)
(72) Inventor: Cocchi, Gino, 40137 Bologna (IT); Zaniboni, Gianni, 40044 Borgonuovo di Sasso Marconi (IT)
(74) Representative: Porsia, Attilio

(56) References cited:
- EP-A- 0 059 329
- EP-A- 0 769 251
- WO-A-98/54979
- FR-A- 2 639 192
- US-A- 1 791 774

## Description

The present invention relates to ice-cream making machines, particularly so-called "compact" machines having a pasteurizer on top of an ice-cream mixture freezing cylinder.

This kind of machine has an ice-cream mixture feed line for transferring the mixture to the freezing cylinder. This line is often made in the form of a dispensing pipe located in the vicinity of the bottom wall of the pasteurizer, which pours the pasteurized mixture into a loading hopper on the end door of the freezing cylinder. The dispensing pipe is normally provided with dispensing control means.

Such a machine is known from EP-0059329.

Ignoring the freezing conditions, the structure of the ice cream is directly influenced by the correct blending mixing and working of the ice-cream mixture in the preceding stages. A smoother ice-cream structure would lead to a product that is more pleasant to the palate, and therefore more suited to consumers' likings; as a matter of preference, homogenization done to the mixture at cooking (i.e. pasteurization) temperature is the operation that can contribute most to the smoothness of the structure of the ice-cream. But it is equally clear that the process of refining the structure could require additional stages of production which could be laborious to many ice-cream makers. In particular, for a craftsman using machines of the kind described above, it must be possible to carry out all the processes to which the product must be subjected in the shortest possible amount of time and in the simplest possible manner.

It is therefore an object of the present invention to provide a machine of the so-called "compact" type capable of producing a smoother ice cream structure by an action which is extremely simple and quick to carry out.

The subject of the present invention is therefore a machine, of the so-called "compact" type, comprising a pasteurizer on top of a freezing cylinder for freezing the ice-cream mixture, and also comprising a line for feeding the ice-cream mixture from the pasteurizer to the said cylinder, comprising a dispensing pipe, which has control means, and loading means communicating with the chamber inside the said cylinder, which machine is characterized in that homogenizing means capable of acting on the flow of ice-cream mixture can be inserted into the said feed line.

In a preferred embodiment the said homogenizing means are located at the ice-cream mixture dispensing control means.

Other advantages and features will become clear from the following detailed description of one embodiment of the device according to the present invention. This description, which is given by way of non-limiting example, refers to the attached drawings, in which:
Figure 1 is a view in longitudinal section of the machine according to the present invention;
Figure 2 is a view in end elevation with parts in section of a detail of the machine illustrated in Figure 1; and
Figures 3 and 4 are two views in section of the means for adjusting the dispensing of the ice-cream mixture, in two different operating positions.

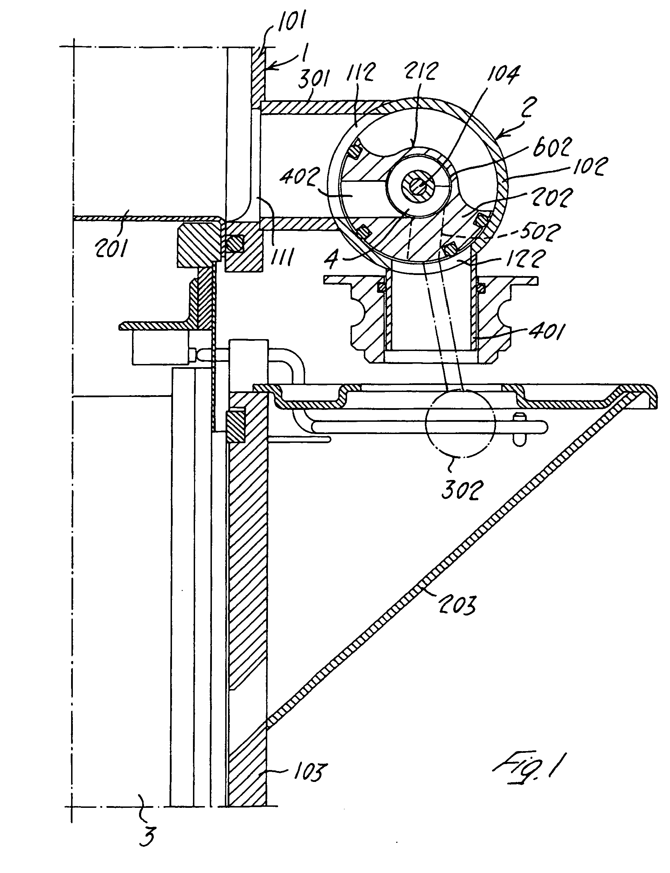

Figure 1 illustrates, in longitudinal section, the machine according to the present invention; the reference 1 denotes the tank of the pasteurizer, in the side wall 101 of which, close to the bottom wall 201, is a discharge aperture 111 communicating with the pipe 301. This pipe communicates, via the tap 2, with the discharge nozzle 401, which pours the pasteurized ice-cream mixture into the hopper 203 which is connected to the end door 103 of the freezing cylinder 3.

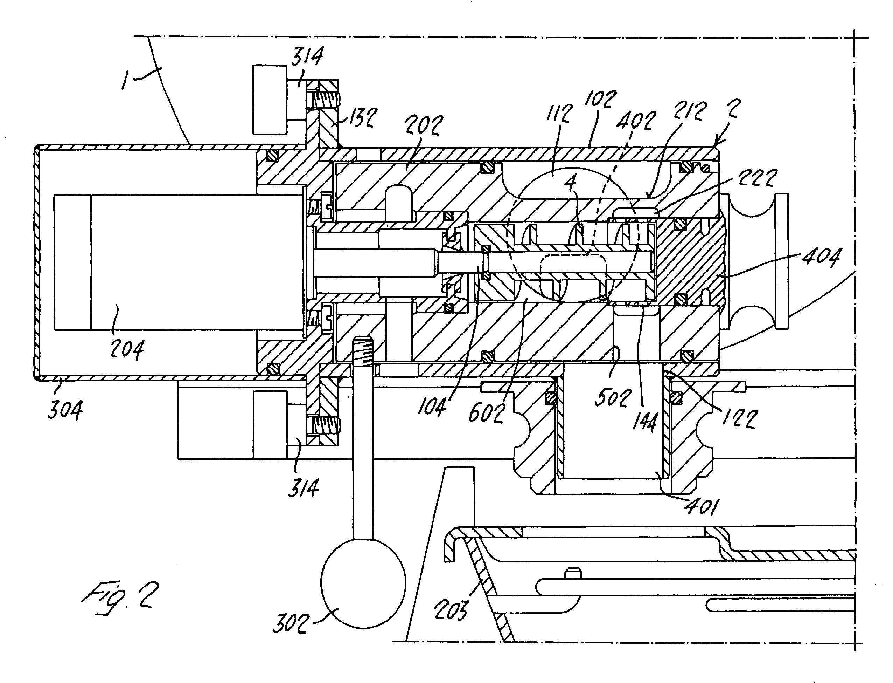

The tap 2 comprises the cylindrical seat 102 which houses the closing element 202 controlled by the lever 302 shown in chain line in the figure. The seat 102 has radial apertures 112 and 122 connected to the pipe 301 and nozzle 401, respectively. The closing element 202 has a basically cylindrical body in which the large radial recess 212 is formed (see also Figure 2); also formed in the closing element are the radial channels 402 and 502, channel 502 being indicated in broken lines in the figure. These channels communicate with the axial through cavity 602 housing the screw 4, the screw being keyed to the shaft 104, which is part of the ice-cream mixture homogenizing means according to the invention.

Figure 2 depicts a detail in end elevation, with some parts in section, of the machine according to the present invention, in which the same parts are given the same numbers. The figure clearly shows the means for homogenizing the mixture exiting from the aperture 111 of the pasteurizer 1 (see Figure 1), that is the screw 4 inserted inside the axial cavity 602 of the closing element 202 of the tap 2, the said screw 4 passing inside the die 144 formed radially in the walls of the plug 404 fitted into the opposite end of the cavity 602. The die 144 opens into the annular chamber 222 formed in the closing element 202, which communicates with one end of the channel 502, which at the other end can be put in communication, as in the case illustrated in the figure, with the nozzle 401. The screw 4 is keyed to the shaft 104, which in turn is connected to the motor 204 mounted in the housing 304, which is connected, by the connection means 314, to the flange 132 of the seat 102 of the tap 2.

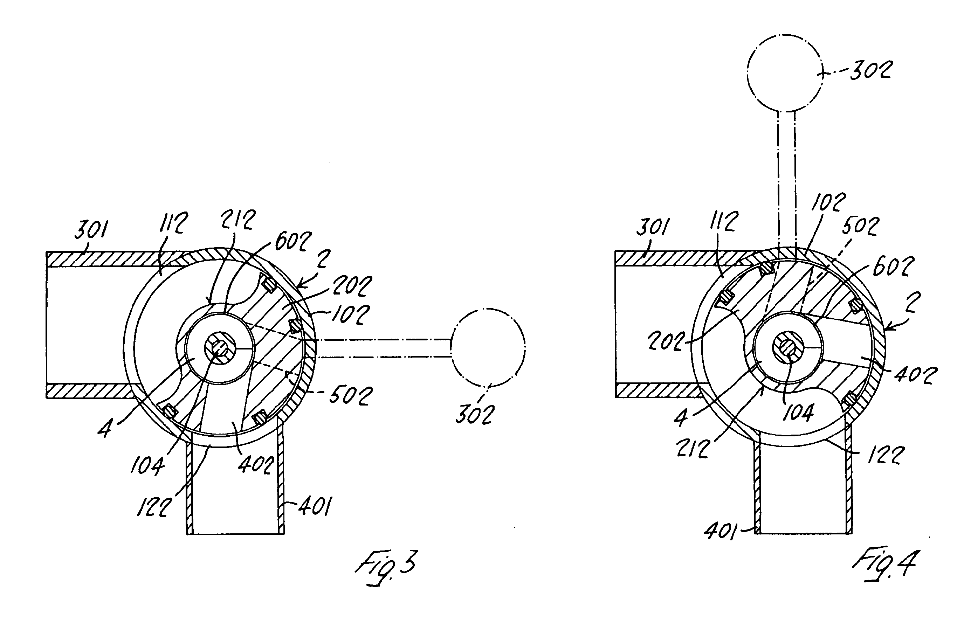

Lastly, Figures 3 and 4 show two other positions available to the tap 2 illustrated in the previous figures, and with particular reference to Figure 1. As before, the same parts are indicated by the same reference numbers. In Figure 3 the closing element 202 of the tap 2 is in the closed position, with the recess 212 towards the pipe 301 and the channel 402 towards the nozzle 401, while the channel 502 is closed by the seat 102 of the tap 2.

In Figure 4 the recess 212 allows direct communication between the pipe 301 and the nozzle 401, bypassing in this case the homogenizing means in the closing element 202.

It will be clear from the following how the ice-cream making machine according to the present invention works. With reference to Figures 1 and 2, the machine of the invention is shown with the closing element 202 of the tap 2 positioned so that the flow of ice-cream mixture leaving the pipe 301 and subsequently to be discharged into the hopper 203 through the nozzle 401, passes through the homogenizing means consisting of the screw 4 and die 144. The speed of rotation of the screw 4 can be controlled via the motor 204 in order to produce the desired smoothness for the specific ice-cream mixture being produced at any particular time. The action of the homogenizing means is performed on the product at the cooking temperature because it is found that homogenization occurs most efficiently under these conditions.

The positioning of the homogenizing means in the ice-cream mixture dispensing control unit offers the advantage of an essentially simple construction that adapts well to machines of this type that already have taps with cylindrical closing elements. This type of solution is also advantageous in operational terms, given that the ice-cream maker must limit himself to opening the tap and positioning it so as to engage the homogenizing means, acting in practically the same way as he would act on a machine that did not have these means. However, homogenizing means designed differently from those illustrated and described can be positioned in a similarly convenient way at some point along the feed line followed by the ice-cream mixture on its way to the freezing cylinder.

Also, as can be seen in Figure 4, the shape of the closing element 202, with its large radial recess 212, can also be used to bypass the homogenization, particularly for those ice-cream mixtures intended for the preparation of a product required to have a heterogeneous quality, such as fruit-based mixtures with solid parts in suspension.

The ice-cream making machine designed as herein is capable of producing an ice cream with a smoother and therefore pleasanter structure without requiring the adoption of complex procedures by the craftsmen using the machine. It is also produced in an essentially simple and economical manner.

## Claims

1. Ice-cream making machine, of the so-called "compact" type, comprising a pasteurizer (1) on top of a freezing cylinder (3) for freezing the ice-cream mixture, and also comprising a line (301, 401, 203) for feeding the ice-cream mixture from the pasteurizer (1) to the said cylinder (3), comprising a dispensing pipe (301, 401), which has control means (2), and loading means (203) communicating with the chamber inside the said cylinder (3), which machine is **characterized in that** homogenizing means (4, 144) capable of acting on the flow of ice-cream mixture can be inserted into the said feed line (301, 401, 203).

2. Machine according to Claim 1, in which the said homogenizing means (4, 144) are located at the ice-cream mixture dispensing control means (2).

3. Machine according to Claim 2, in which the said homogenizing means (4, 144) can be inserted into the said feed line (301, 401) by actuating the said ice-cream mixture dispensing control means (2).

4. Machine according to Claim 2 or 3, in which the said control means comprise a tap (2) consisting of a cylindrical closing element (202) having its axis perpendicular to the direction of flow of the ice-cream mixture, engaged and rotating in a seat (102) that is also cylindrical, and communicating with a pipe (301) connected to the said pasteurizer and to a nozzle (401) pointing towards the said loading means (203) of the said cylinder (3), through two respective radial apertures (112, 122) formed at an angular distance from each other in its side wall.

5. Machine according to Claim 3, in which the said homogenizing means (4, 144) are housed in an axial cavity (602) formed in the said closing element (202) of the said tap (2), the said cavity (202) communicating via suitable radial channels (402, 502) with the said seat (102).

6. Machine according to Claim 4, in which the said homogenizing means comprise a screw (4) inside the said axial cavity (602), having actuating means (204) at one end, and an annular die (144) at the opposite end of the screw (4) to that connected to the actuating means (204), the said die being engaged in an annular chamber (222) communicating with one of the channels (502) formed in the said closing element (202).

7. Machine according to any one of Claims 4 to 6, in which the said closing element is provided, in its external side wall, with a large radial recess (212) capable of placing the said pipe (301) in direct communication with the said nozzle (401).

## Patentansprüche

1. Speiseeismaschine des sogenannten "kompakten" Typs, die umfasst: einen Pasteurisierer (1) oben auf einem Gefrierzylinder (3) zum Gefrieren der Speiseeis-Mischung, sowie eine Leitung (301, 401, 203) zur Beförderung der Speiseeis-Mischung vom Pasteurisierer (1) zu diesem Zylinder (3), die ein Abfüllrohr (301, 401) umfasst, das eine Steuervorrichtung (2) hat, sowie eine Füllvorrichtung (203), die mit der Kammer im Innern des Zylinders (3) in Verbindung steht, wobei diese Maschine **dadurch gekennzeichnet ist, dass** Homogenisierungs-Vorrichtungen (4, 144), die auf den Fluss der Speiseeis-Mischung einwirken können, in die Leitung (301, 401, 203) eingesetzt werden können.

2. Maschine nach Anspruch 1, bei der die Homogenisierungs-Vorrichtungen (4, 144) an der Steuervorrichtung (2) für das Abfüllen der Speiseeis-Mischung angeordnet sind.

3. Maschine nach Anspruch 2, bei der die Homogenisierungs-Vorrichtungen (4, 144) durch Betätigen der Steuervorrichtung (2) für das Abfüllen der Speiseeis-Mischung in die Leitung (301, 401) eingesetzt werden können.

4. Maschine nach Anspruch 2 oder 3, bei die Steuervorrichtung einen Zapfhahn (2) umfasst, der aus einem zylinderförmigen Verschlusselement (202) besteht, dessen Achse senkrecht zur Fließrichtung der Speiseeis-Mischung ist, und das in einer Aufnahme (102) sitzt und rotiert, die ebenfalls zylinderförmig ist und mit einem Rohr (301) kommuniziert, das mit dem Pasteurisierer und mit einer Düse (401) verbunden ist, die zu der Füllvorrichtung (203) des Zylinders (3) hin zeigt, und zwar jeweils durch zwei radiale Öffnungen (112, 122), die in einem Winkelabstand zueinander in der Seitenwand gebildet sind.

5. Maschine nach Anspruch 3, bei der die Homogenisierungs-Vorrichtungen (4, 144) in einem Axialhohlraum (602) untergebracht sind, der in dem Verschlusselement (202) des Zapfhahns (2) gebildet ist, wobei der Hohlraum (602) über geeignete radiale Kanäle (402, 502) mit der Aufnahme (102) in Verbindung steht.

6. Maschine nach Anspruch 4, bei der die Homogenisierungs-Vorrichtungen eine Spiralschraube (4) im Innern des Axialhohlraums (602) umfassen, die an einem Ende eine Betätigungsvorrichtung (204) aufweist, und an dem Ende der Spiralschraube (4), das dem mit der Betätigungsvorrichtung (204) verbundenen Ende gegenüberliegt, ein ringförmiges Mundstück (144) hat, wobei das Mundstück in einer ringförmigen Kammer (222) sitzt, die mit einem der Kanäle (502) in Verbindung steht, die in dem Verschlusselement (202) gebildet sind.

7. Maschine nach einem der Ansprüche 4 bis 6, bei der das Verschlusselement auf seiner äußeren Seitenwand mit einer breiten radialen Auskehlung (212) versehen ist, die dazu dient, das Rohr (301) in direkte Verbindung mit der Düse (401) zu bringen.

## Revendications

1. Machine de fabrication de crème glacée du type dit "compact" comprenant un pasteuriseur (1) au dessus d'un cylindre (3) de congélation pour congeler le mélange de crème glacée, et comprenant aussi une ligne (301 401 203) pour envoyer le mélange de crème glacée du pasteuriseur (1) au cylindre (3), comprenant un conduit (301 401) de distribution qui a des moyens (202) de commande, et des moyens (203) de chargement communiquant avec la chambre à l'intérieur du cylindre (3), cette machine étant **caractérisée en ce que** des moyens (444) d'homogénéisation aptes à agir sur le courant du mélange de crème glacée peuvent être insérés dans la ligne (301 401 203), d'alimentation.

2. Machine suivant la revendication 1, dans laquelle les moyens (444) d'homogénéisation sont localisés sur les moyens (202) de commande de distribution du mélange de crème glacée.

3. Machine suivant la revendication 2, dans laquelle les moyens (444) d'homogénéisation peuvent être insérés dans la ligne (301 401) d'alimentation en actionnant les moyens (2) de commande de distribution du mélange de crème glacée.

4. Machine suivant la revendication 2 ou 3, dans laquelle les moyens de commande comprennent un robinet (2) consistant en un aimant (202) cylindrique de fermeture dont l'axe est perpendiculaire à la direction du courant du mélange de crème glacée, qui pénètre et qui tourne dans un siège (102) qui est aussi cylindrique et qui communique avec un conduit (301) communiquant avec le pasteuriseur et avec une buse (401) faisant pointer vers le bas les moyens (203) de chargement du cylindre (3) par deux ouvertures (112 122) radiales respectives formées à une certaine distance angulaire l'une de l'autre dans sa paroi latérale.

5. Machine suivant la revendication 3, dans laquelle les moyens (444) d'homogénéisation sont logées dans une cavité (602) axiale formée dans l'élément (202) de fermeture du robinet (2), la cavité (202) communiquant par des canaux (402 502) radiaux appropriés avec le siège (102).

6. Machine suivant la revendication 4, dans laquelle les moyens d'homogénéisation comprennent une vis (4) à l'intérieur de la cavité (602) axiale, ayant des moyens (204) d'actionnement à une extrémité et une matrice (144) annulaire à l'extrémité opposée de la vis (4) à celle reliée aux moyens (204) d'actionnement, la matrice pénétrant dans une chambre (222) annulaire communiquant avec l'un des canaux (502) formés dans l'élément (202) de fermeture

7. Machine suivant l'une des revendications 4 à 6, dans laquelle l'élément de fermeture est muni dans sa paroi latérale extérieure d'un grand chambrage (212) radial, apte à mettre le conduit (301) en communication directe avec la buse (401).
